# EUROPÄISCHE PATENTANMELDUNG

(11) **EP 1 429 073 A1**
(43) Veröffentlichungstag der Anmeldung: **16.06.2004**
(21) Anmeldenummer: 02026797.7
(22) Anmeldetag: 02.12.2002
(51) Int. Cl.: F22B 37/10, F22B 37/04

(54) **Verfahren zur Herstellung eines Durchlaufdampferzeugers und Durchlaufdampferzeuger**

(71) Anmelder: SIEMENS AKTIENGESELLSCHAFT, 80333 München (DE)
(72) Erfinder: Franke, Joachim, Dr., 90518 Altdorf (DE); Kral, Rudolf, 91058 Erlangen (DE)

(57) **Zusammenfassung**

Ein zur Herstellung eines bei hohen Dampfdrücken betreibbaren Durchlaufdampferzeugers (1) geeignetes Verfahren soll nicht unverhältnismäßig teuer oder technisch aufwendig sein. Dazu wird erfindungsgemäß eine Anzahl von zur Bildung der Dampferzeugerrohre (12) vorgesehenen, aus einem Material einer ersten Materialkategorie gefertigten Rohrsegmenten (18) zu einer Anzahl von Modulen (17) zusammengefasst, wobei jedes Modul (17) an einer Anzahl von für eine Zusammenschaltung mit einem weiteren Modul (17) vorgesehenen Verbindungsstellen mit jeweils einem aus einem Material einer zweiten Materialkategorie gefertigten Übergangsstück (19) versehen wird.

## Beschreibung

Die Erfindung bezieht sich auf ein Verfahren zur Herstellung eines Durchlaufdampferzeugers, der eine aus gasdicht miteinander verschweißten Dampferzeugerrohren gebildete Umfassungswand aufweist, die in der Werkstatt in Modulen vorgefertigt wird, welche bei der Endmontage miteinander verschweißt werden. Sie bezieht sich weiter auf einen für eine Herstellung durch ein solches Verfahren besonders geeigneten Durchlaufdampferzeuger.

In einem Durchlaufdampferzeuger führt die Beheizung einer Anzahl von Dampferzeugerrohren, die zusammen die gasdichte Umfassungswand der Brennkammer bilden, zu einer vollständigen Verdampfung eines Strömungsmediums in den Dampferzeugerrohren in einem Durchgang. Das Strömungsmedium - üblicherweise Wasser - wird nach seiner Verdampfung den Dampferzeugerrohren nachgeschalteten Überhitzerrohren zugeführt und dort überhitzt. Die Dampferzeugerrohre des Durchlaufdampferzeugers können dabei vertikal oder spiralförmig und damit geneigt angeordnet sein.

Ein Durchlaufdampferzeuger unterliegt im Gegensatz zu einem Naturumlaufdampferzeuger keiner Druckbegrenzung, so dass er für Frischdampfdrücke weit über dem kritischen Druck von Wasser (pₖᵣᵢₜ = 221 bar) - wo keine Unterscheidung der Phasen Wasser und Dampf und damit auch keine Phasentrennung möglich ist - ausgelegt werden kann. Ein hoher Frischdampfdruck begünstigt einen hohen thermischen Wirkungsgrad und somit niedrigere CO₂-Emissionen eines fossil beheizten Kraftwerks.

Umfassungswände großer Brennkammern - beispielsweise für Durchlaufdampferzeuger mit einer Auslegungsleistung von mehr als 100 MWel - können aus Transportgründen nicht im Ganzen in der Werkstatt gefertigt werden. Vielmehr ist in diesen Fällen eine Endmontage am eigentlichen Einsatzort erforderlich, bei der die zur Bildung der Umfassungswand der Brennkammer vorgesehenen Teilstücke oder auch Module direkt vor Ort miteinander verschweißt werden. Dabei kann zur Produktionserleichterung eine modulare Bauweise vorgesehen sein, bei der die Umfassungswand in Modulen vorgefertigt wird, die bei der Endmontage miteinander verschweißt werden müssen. Eine derartige Bauweise führt jedoch zu erheblichen Einschränkungen hinsichtlich der Auswahl der einsetzbaren Materialien, da gerade beim Umgang mit thermisch und mechanisch vergleichsweise hoch belasteten Materialien beim Schweißen eine Wärmenachbehandlung zwingend erforderlich sein kann.

Eine Wärmenachbehandlung der Schweißnähte erfordert erheblichen technischen Aufwand und kann daher üblicherweise nur in der Werkstatt und nicht bei der Endmontage direkt vor Ort vorgenommen werden. Daher kommen bisher bei der Herstellung von Umfassungswänden für große Brennkammern von Durchlaufdampferzeugern nur Materialien zum Einsatz, bei denen keine Wärmenachbehandlung der Schweißnähte erforderlich ist.

Allerdings ist es zur Erhöhung des Wirkungsgrades und damit zur Reduktion der CO₂-Emissionen eines fossil beheizten Kraftwerkes wünschenswert, Durchlaufdampferzeuger für besonders hohe Frischdampfdrücke und -temperaturen auszulegen. Zur Herstellung solcher Durchlaufdampferzeuger sind Materialien erforderlich, die Belastungen durch hohe Wärmestromdichten bei hohen Dampftemperaturen und damit hohen Materialtemperaturen standhalten. Diese Materialien erfordern aber gerade eine Wärmenachbehandlung der Schweißnähte.

Eine mögliche Alternative zu diesen Materialien wären Werkstoffe auf Nickelbasis, die trotz ihrer hohen Wärmebelastbarkeit keine Wärmenachbehandlung der Schweißnähte erfordern, deren Verwendung allerdings zu einer erheblichen Verkomplizierung und Verteuerung der Herstellung führen würde.

Der Erfindung liegt daher die Aufgabe zugrunde, ein zur Herstellung eines bei hohen Dampfdrücken betreibbaren Durchlaufdampferzeugers geeignetes Verfahren der oben genannten Art anzugeben, das nicht unverhältnismäßig teuer oder technisch aufwendig ist. Zudem soll ein für eine Herstellung durch ein derartiges Verfahren geeigneter Durchlaufdampferzeuger angegeben werden.

Bezüglich des Verfahrens wird diese Aufgabe erfindungsgemäß gelöst, indem eine Anzahl von zur Bildung der Dampferzeugerrohre vorgesehenen, aus einem Material einer ersten Materialkategorie gefertigten Rohrsegmenten zu einer Anzahl von Modulen zusammengefasst werden, wobei jedes Modul an einer Anzahl von für eine Zusammenschaltung mit einem weiteren Modul vorgesehenen Verbindungsstellen mit jeweils einem aus einem Material einer zweiten Materialkategorie gefertigten Übergangsstück versehen wird.

Die Erfindung geht dabei von der Überlegung aus, dass bei der Herstellung des Durchlaufdampferzeugers technischer Aufwand und Kosten gering gehalten werden können, indem der Durchlaufdampferzeuger für eine konsequente Verarbeitung herkömmlicher Materialien anstelle teurer und schwierig zu verarbeitender Nickel-Basis-Werkstoffe ausgelegt ist. Dabei sollte der herzustellende Durchlaufdampferzeuger für Belastungen durch hohe Frischdampfdrücke und -temperaturen geeignet ausgelegt sein. Dem ist vorliegend dadurch Rechnung getragen, dass die die Umfassungswand bildenden Dampferzeugerrohre in ihren wesentlichen Bestandteilen aus einem hierzu geeignet gewählten Material gefertigt sind.

Um den Herstellungsaufwand dennoch gering zu halten, sollte der Durchlaufdampferzeuger dabei zu einem besonders hohen Grad in der Werkstatt vorgefertigt werden, so dass insbesondere eine möglicherweise erforderliche Wärmenachbehandlung von Schweißnähten unter vergleichsweise einfachen Bedingungen und unter Rückgriff auf eine Vielzahl bereitgehaltener Ressourcen erfolgen kann. Die vorgefertigten Module können somit aus Rohrsegmenten eines für hohe Frischdampfdrücke und - temperaturen geeigneten Materials gebildet sein.

Um eine Endmontage der hinsichtlich dieser Kriterien geeignet vorgefertigten Module unter konsequenter Vermeidung von Nachbehandlungsbedarf zu erlauben, sollten die Module mit entsprechenden Übergangsstücken versehen sein, die ein Verschweißen bei der Endmontage ohne Wärmenachbehandlung der Schweißnähte zulassen. Dazu sind die Übergangsstücke im Gegensatz zu den Rohrsegmenten aus einem Material mit entsprechend anderen Eigenschaften gefertigt.

Vorteilhafte Ausgestaltungen der Erfindung sind Gegenstand der Unteransprüche.

Die Materialwahl für Rohrsegmente einerseits und Übergangsstücke oder aus ihnen gebildete Übergangseinheiten andererseits erfolgt vorzugsweise gezielt im Hinblick auf das Kriterium, ob eine Wärmenachbehandlung der Schweißnähte erforderlich ist. Ein besonders geeignetes Kriterium zur Beurteilung, ob ein Material eine Wärmenachbehandlung der Schweißnähte erfordert, ist die sogenannte Vickershärte (DIN 50 133).

Zweckmäßigerweise werden daher die durch hohe Wärmestromdichten stark belasteten,Teile der Brennkammerwände des Durchlaufdampferzeugers aus einem Material einer ersten Materialkategorie gefertigt, dessen Vickershärte höher ist als die Vickershärte der weniger stark belasteten Teile der Brennkammerwände. Letztere werden zweckmäßigerweise aus einem Material der zweiten Materialkategorie gefertigt, wobei die Vikershärte HV10 der Materialien der zweiten Materialkategorie vorzugsweise niedriger als etwa 350 bis 400 ist.

Benachbarte, zur Durchströmung eines Strömungsmediums parallel geschaltete Dampferzeugerrohre werden vorteilhafterweise miteinander über Flossen verbunden, insbesondere um einen hohen spezifischen Wärmeeintrag in die Dampferzeugerrohre sicherzustellen. Diese Flossen werden vorteilhafterweise aus einem Material der zweiten Materialkategorie gefertigt. Wie sich nämlich herausgestellt hat, sind die Flossen als nicht durchströmte Bauteile des Durchlaufdampferzeugers wegen des fehlenden Innendruckes keinen zu hohen Belastungen ausgesetzt, so dass die diesbezüglichen Materialanforderungen vergleichsweise gering sind. Diese geringen Materialanforderungen werden auch von Materialien der zweiten Materialkategorie erfüllt. Über derartige Flossen ist bei vertikaler Berohrung des Durchlaufdampferzeugers auch eine Zusammenschaltung der einzelnen Module in horizontaler Richtung bei der Endmontage problemlos möglich. Dazu werden vorzugsweise an den Modulen an den zur Zusammenschaltung mit anderen Modulen vorgesehenen Stellen jeweils Flossen der halben Breite bereits in der Werkstatt angeschweißt, über die bei der Endmontage die Zusammenschaltung erfolgt.

Die Zusammenschaltung der einzelnen Module in vertikaler Richtung erfolgt zweckmäßigerweise über Übergangseinheiten bestehend aus einer Anzahl von Übergangsstücken und bedarfweise aus zusätzlichen Verbindungsbögen. Dabei wird beispielsweise an ein Rohrsegment aus einem Material der ersten Materialkategorie in der Werkstatt ein Übergangsstück aus einem Material der zweiten Materialkategorie angeschweißt und die Schweißnaht wärmenachbehandelt. Bei der Endmontage werden zwei derart gefertigte Rohrsegmente beispielsweise direkt oder durch einen Verbindungsbogen, der ebenfalls aus dem Material der zweiten Materialkategorie gefertigt ist, verbunden. Die bei der Endmontage angebrachten Schweißnähte müssen nicht wärmenachbehandelt werden, weil dies das verwendete Material nicht erfordert.

Bezüglich des Durchlaufdampferzeugers wird die genannte Aufgabe dadurch gelöst, dass zumindest einige der Dampferzeugerrohre jeweils aus einer Anzahl von strömungsmediumsseitig hintereinander geschalteten Rohrsegmenten gebildet sind, und dass in Strömungsrichtung aufeinanderfolgende Rohrsegmente eines Dampferzeugerrohres jeweils über eine aus einem Material einer zweiten Materialkategorie gefertigte Übergangseinheit miteinander verbunden sind.

Dabei besteht die Übergangseinheit vorteilhafterweise aus einer Anzahl von Übergangsstücken und gegebenenfalls einem Verbindungsbogen und ist derart angeordnet, dass eine zur Verbindung eines Übergangsstückes mit einem weiteren Bauteil angebrachte Schweißnaht außerhalb einer von den Rohrsegmenten aufgespannten Wandfläche liegt.

Benachbarte Dampferzeugerrohre sind zweckmäßigerweise über Flossen gasdicht miteinander verbunden, wobei die Flossen ebenfalls aus einem Material der zweiten Materialkategorie gefertigt sind.

Die mit der Erfindung erzielten Vorteile bestehen insbesondere darin, dass durch die Verwendung verschiedener Materialien in der Umfassungswand der Brennkammer, nämlich für die Rohrsegmente einerseits und für die Übergangsstücke und die aus diesen gebildeten Übergangseinheiten andererseits, mit Eigenschaften, die der jeweiligen Wärmebelastung der Dampferzeugerrohre angepasst sind, das Herstellungsverfahren für Durchlaufdampferzeuger für hohe Dampfdrücke besonders einfach gehalten werden kann. Die Verwendung und Kombination verschiedenartiger Materialien ermöglicht dies insbesondere dadurch, dass die Dampferzeugerrohre aus einem Material der ersten Materialkategorie in der Werkstatt vorgefertigt, zu Modulen verschweißt, wärmenachbehandelt und an den zur Zusammenschaltung mit anderen Modulen bei der Montage vorgesehenen Stellen mit Übergangsstücken aus einem Material der zweiten Materialkategorie versehen werden, welches keine Wärmenachbehandlung erfordert. Durch die geeignete Anordnung dieser Übergangsstücke außerhalb des hohen Wärmestromdichten ausgesetzten Bereiches werden Überlastungen des Materials vermieden. Die bei der Montage durch Verschweißen der einzelnen Module miteinander entstandenen Schweißnähte erfordern keine Wärmenachbehandlung, da bei der Endmontage nur noch Materialien der zweiten Materialkategorie verschweißt werden müssen.

Ein Ausführungsbeispiel der Erfindung wird anhand einer Zeichnung näher erläutert. Darin zeigen
- FIG 1: schematisch einen Durchlaufdampferzeuger mit vertikal angeordneten Verdampferrohren,
- FIG 2: zwei durch eine Übergangseinheit miteinander verbundene Rohrsegmente,
- FIG 3: zwei durch eine alternative Ausführung einer Übergangseinheit miteinander verbundene Rohrsegmente,
- Fig 4: zwei durch eine weitere alternative Ausführung einer Übergangseinheit miteinander verbundene Rohrsegmente, und
- FIG 5: einen Querschnitt durch über Flossen miteinander verbundene Dampferzeugerrohre.

Gleiche Teile sind in allen Figuren mit denselben Bezugszeichen versehen.

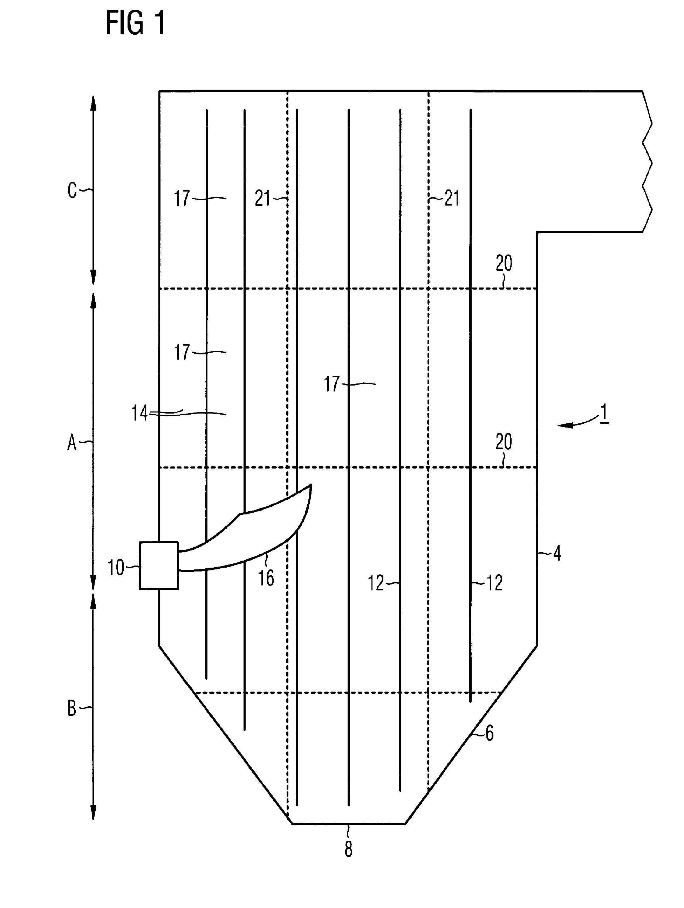

In Figur 1 ist schematisch ein Durchlaufdampferzeuger 1 dargestellt, dessen vertikaler Gaszug von einer Umfassungswand 4 umgeben ist und eine Brennkammer bildet, die am unteren Ende in einen trichterförmigen Boden 6 übergeht. Der Boden 6 umfasst eine nicht näher dargestellte Austragsöffnung 8 für Asche.

Im Bereich A des Gaszugs sind eine Anzahl von Brennern 10, von denen nur einer gezeigt ist, in der aus vertikal angeordneten Dampferzeugerrohren 12 gebildeten Umfassungswand der Brennkammer angebracht. Die vertikal verlaufend angeordneten Dampferzeugerrohre 12 sind über Flossen 14 zur gasdichten Umfassungswand 4 miteinander verschweißt.

In der Brennkammer befindet sich beim Betrieb des Durchlaufdampferzeugers 1 ein bei der Verbrennung eines fossilen Brennstoffes entstehender Flammenkörper 16. Durch diesen Flammenkörper 16 ist der mit "A" gekennzeichnete Bereich des Durchlaufdampferzeugers 1 bei dessen Betrieb einer sehr hohen Wärmestromdichte ausgesetzt. Der Flammenkörper 16 weist ein Temperaturprofil auf, das, ausgehend vom Bereich der Brenner, in vertikaler Richtung hin abnimmt. Unter dem Bereich A befindet sich ein flammenferner Bereich B, über dem Bereich A ein weiterer flammenferner Bereich C, die infolge des entstehenden Temperaturprofils einer vergleichsweise geringen Beheizung ausgesetzt sind.

Der Durchlaufdampferzeuger 1 ist bei eher begrenztem Herstellungsaufwand auch für eine Betreibbarkeit bei hohen Frischdampfdrücken und -temperaturen und somit für einen besonders hohen Wirkungsgrad geeignet ausgelegt. Dazu sind die Dampferzeugerrohre 12 insbesondere im Bereich hoher Wärmestromdichten und hoher Materialtemperaturen aus einem Material gefertigt, welches den Belastungen durch hohe Wärmestromdichten standhält. Um dabei Herstellungsaufwand und -kosten gering zu halten, wird die Umfassungswand 4 der Brennkammer in der Werkstatt in Modulen, 17 vorgefertigt. Bei der Vorfertigung der Module 17 in der Werkstatt wird gezielt genutzt, dass dort vielfältige Ressourcen ohne weiteren Aufwand zur Verfügung stehen, so dass insbesondere eine Verarbeitung von Materialien hoher thermischer Belastbarkeit trotz des damit verbundenen Aufwands insbesondere bei der thermischen Nachbehandlung von Schweißnähten möglich ist.

Zur Herstellung der Module werden daher aus einem Material einer ersten Materialkategorie, das insbesondere eine hohe thermische Belastbarkeit aufweist, gefertigte Rohrsegmente 18 miteinander verschweißt. Die Rohrsegmente 18 sind dabei derart gewählt, dass nach der Endmontage eine Mehrzahl von strömmungsmediumsseitig hintereinander geschalteten Rohsegmenten 18 jeweils ein Dampferzeugerrohr 12 bildet.

Um bei der Endmontage der Module 17 eine Wärmenachbehandlung vermeiden zu können, werden sie anschließend - noch in der Werkstatt - an den für eine Zusammenschaltung mit einem weiteren Modul 17 vorgesehenen Verbindungsstellen mit einem Übergangsstück 19 aus einem Material einer zweiten Materialkategorie versehen. Das Material der zweiten Materialkategorie ist dabei derart gewählt, dass es für ein Verschweißen ohne thermische Nachbehandlung geeignet ist. Bei der Anbringung an das jeweils zugeordnete Rohrsegment 18 - ebenfalls noch in der Werkstatt - erfolgt eine thermische Nachbehandlung dieser Schweißnaht, um den Erfordernissen des das jeweilige Rohrsegment 18 bildenden Materials genüge zu tun. Die Materialien der zweiten Materialkategorie weisen dabei im Vergleich zu den Materialien der ersten Materialkategorie eine geringere Vickershärte auf.

Bei der Endmontage auf der Baustelle schließlich werden die einzelnen Module 17 an horizontalen Trennstellen 20 und vertikalen Trennstellen 21 jeweils über die Übergangsstücke 19 miteinander verschweißt, wobei ausschließlich eine Verbindung von aus einem Material der zweiten Materialkategorie gefertigten Bauteilen miteinander erfolgt, so dass dort keine Wärmenachbehandlung erforderlich ist.

An den vertikalen Trennstellen 21 erfolgt die Verbindung über Flossen 14 und an den horizontalen Trennstellen 20 über aus einer Mehrzahl von miteinander verschweißten Übergangsstücken 19 gebildete Übergangseinheiten 22.

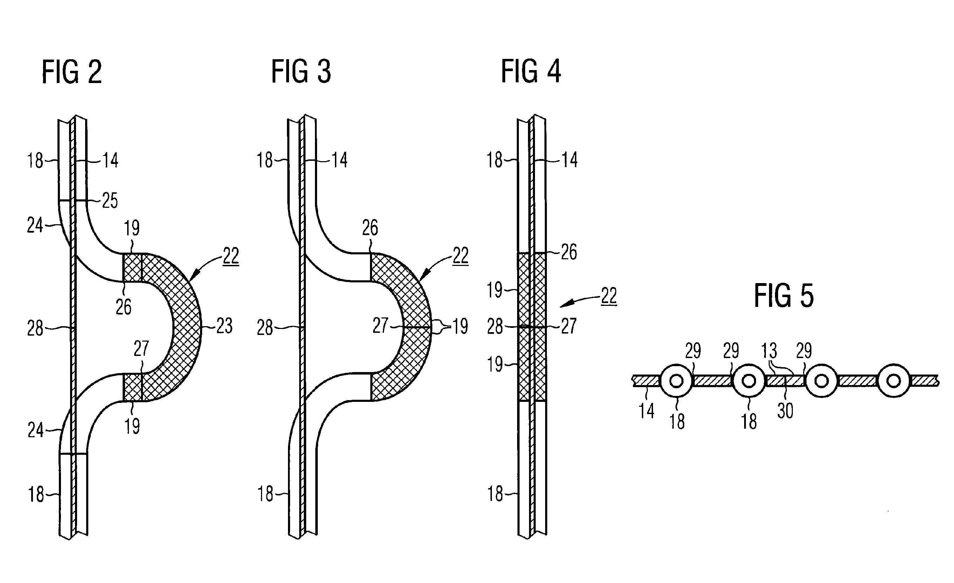

Ein Ausführungsbeispiel für den Übergangsbereich an einer horizontalen Trennstelle 20, das besonders für den Einsatz im flammennahen Bereich A geeignet ist, zeigt Figur 2. Dort sind zwei für die Verwendung im Bereich A, in dem die Wärmestromdichte besonders hoch ist, vorgesehene Dampferzeugerrohre 12 durch eine Übergangseinheit 22 in Strömungsrichtung miteinander verbunden. Die Übergangseinheit 22 besteht dabei aus zwei Übergangsstücken 19 und einem Verbindungsbogen 23, jeweils gefertigt aus einem Material der zweiten Materialkategorie. Zwei Anschlussstücke 24 aus einem Material der ersten Materialkategorie sind zur Verbindung der Übergangsstücke 22 mit den Dampferzeugerrohren 12 vorgesehen.

Eine Schweißnaht 25 zwischen einem Rohrsegment 18 und einem Anschlussstück 24 wird in der Werkstatt ausgeführt, weil sie aufgrund der Eigenschaften des Materials der Rohrsegmente 18 eine Wärmenachbehandlung erfordert; das gleiche gilt für eine Schweißnaht 26 zwischen einem Anschlussstück 24 und einem Übergangsstück 19. Eine Schweißnaht 27 zwischen einem Übergangsstück 19 und einem Verbindungsbogen 23 dagegen kann bei der Endmontage ausgeführt werden, da sie aufgrund der Materialeigenschaften der Übergangsstücke 19 und des Verbindungsbogens 23 keine Wärmenachbehandlung erfordert.

Die Flossen 14 erfahren keinen Innendruck durch ein Strömungsmedium und können daher aus einem Material der zweiten Materialkategorie gefertigt werden, selbst wenn sie im Bereich A liegen. Eine Schweißnaht 28 zwischen Flossen 14 kann daher problemlos bei der Endmontage ausgeführt werden.

Figur 3 zeigt eine alternative Ausführung der Übergangseinheit 22, die ebenfalls im Bereich A verwendet wird, bestehend aus zwei Übergangsstücken 19 aus einem Material der zweiten Materialkategorie. Die Rohrsegmente 18 sind dabei an den zum Verschweißen bei der Endmontage vorgesehenen Stellen derart gebogen, dass sie sich aus der durch die zu einem Modul 17 zusammengefassten Rohrsegmente 18 gebildeten Fläche herauskrümmen. Damit ist bei diesem Ausführungsbeispiel ein separates Anschlussstück 24 nicht notwendig. Eine Schweißnaht 26 zwischen einem Rohrsegment 18 und einem Übergangsstück 19 wird in der Werkstatt ausgeführt, weil sie eine Wärmenachbehandlung erfordert, während eine Schweißnaht 27 zwischen zwei Übergangsstücken 19 bei der Endmontage ausgeführt werden kann. Die Flossen 14 können auch hier problemlos bei der Endmontage an einer Schweißnaht 28 miteinander verschweißt werden, weil sie wegen des fehlenden Innendruckes eines Strömungsmediums aus einem Material der zweiten Materialkategorie gefertigt werden können, welches keine Wärmenachbehandlung erfordert.

Figur 4 zeigt zwei Rohrsegmente 18, die über eine Übergangseinheit 22, die in den Bereichen B und C angebracht werden kann, miteinander verbunden sind. Dabei besteht die Übergangseinheit 22 aus zwei Übergangsstücken 19 aus einem Material der zweiten Materialkategorie. Die Schweißnähte 26 zwischen den Rohrsegmenten 18 und den Übergangsstücken 19 werden in der Werkstatt ausgeführt, während die Schweißnaht 27 bei der Endmontage ausgeführt werden kann, da sie zwischen zwei Materialien der zweiten Materialkategorie liegt, die keine Wärmenachbehandlung erfordern. In diesem Ausführungsbeispiel ist die Übergangseinheit 22 nicht für eine Verschweißung der Übergangsstücke 19 miteinander in einer Ebene außerhalb der von den Rohrsegmenten 18 aufgespannten Wandfläche ausgestaltet, da in den flammenfernen Bereichen B und C der Wärmeeintrag vergleichsweise gering ist und somit die Anordnung von aus einem Material der zweiten Materialkategorie gefertigten Bauteilen in der eigentlichen Wandebene zugelassen werden kann.

Figur 5 zeigt einen Querschnitt durch zu einem Modul 17 zusammengefasste Rohrsegmente 18, die über Flossen 14 miteinander verbunden sind und die Dampferzeugerrohre 12 bilden. Die Dampferzeugerrohre 12 bestehen aus einem Material der ersten Materialkategorie, die Flossen 14 dagegen aus einem Material der zweiten Materialkategorie. Schweißnähte 29 zwischen einem Dampferzeugerrohr 12 und einer Flosse 14 werden in der Werkstatt ausgeführt, da sie aufgrund der Materialeigenschaften der Dampferzeugerrohre 12 eine Wärmenachbehandlung erfordern. Schweißnähte 30 dagegen, über die zwei Module 17 an vertikalen Trennstellen 21 miteinander verbunden werden, können bei der Endmontage ausgeführt werden, da sie keine Wärmenachbehandlung erfordern. Bei der Endmontage werden zwei Module 17 an den vertikalen Trennstellen 21 über Flossen halber Breite 31 miteinander verschweißt.

## Patentansprüche

**1.** Verfahren zur Herstellung eines Durchlaufdampferzeugers (1), der eine aus gasdicht miteinander verschweißten Dampferzeugerrohren (12) gebildete Umfassungswand (4) aufweist, wobei eine Anzahl von zur Bildung der Dampferzeugerrohre (12) vorgesehenen, aus einem Material einer ersten Materialkategorie gefertigten Rohrsegmenten (18) zu einer Anzahl von Modulen (17) zusammengefasst werden, und wobei jedes Modul (17) an einer Anzahl von für eine Zusammenschaltung mit einem weiteren Modul (17) vorgesehenen Verbindungsstellen mit jeweils einem aus einem Material einer zweiten Materialkategorie gefertigten Übergangsstück (19) versehen wird.

**2.** Verfahren nach Anspruch 1, wobei die Materialien der ersten Materialkategorie im Vergleich zu den Materialien der zweiten Materialkategorie eine höhere Vickershärte aufweisen.

**2.** Verfahren nach Anspruch 1 oder 2, wobei die Rohrsegmente (18) derart zu Modulen (17) zusammengefasst werden, dass jedes Modul (17) jeweils eine Fläche bildet, aus der sich die jeweiligen Übergangstücke (19) derart heraus krümmen, dass die zur Zusammenschaltung zweier benachbarter Module (17) vorgesehenen Übergangsstücke (19) in einer zur jeweiligen Fläche versetzten Ebene miteinander verschweißbar sind.

**3.** Verfahren nach einem der Ansprüche 1 bis 3, wobei benachbarte Dampferzeugerrohre (12) über Flossen (14) gasdicht miteinander verschweißt werden, wobei die Flossen (14) aus einem Material der zweiten Materialkategorie gefertigt sind.

**4.** Durchlaufdampferzeuger (1) mit einer aus gasdicht miteinander verschweißten, zur Durchströmung eines Strömungsmediums parallel geschalteten Dampferzeugerrohren (12) gebildeten Umfassungswand (4), bei dem zumindest einige der Dampferzeugerrohre (12) jeweils aus einer Anzahl von strömungsmediumsseitig hintereinander geschalteten, aus einem Material einer ersten Materialkategorie gefertigten Rohrsegmenten (18) gebildet sind, und wobei in Strömungsrichtung aufeinanderfolgende Rohrsegmente (18) eines Dampferzeugerrohres (12) jeweils über eine aus einem Material einer zweiten Materialkategorie gefertigte Übergangseinheit (22) miteinander verbunden sind.

**5.** Durchlaufdampferzeuger (1) nach Anspruch 5, wobei die Materialien der ersten Materialkategorie im Vergleich zu den Materialien der zweiten Materialkategorie eine höhere Vickershärte aufweisen.

**6.** Durchlaufdampferzeuger (1) nach Anspruch 5 oder 6, bei dem eine Anzahl von Übergangseinheiten (22), jeweils bestehend aus einer Anzahl von Übergangsstücken (19) aus einem Material der zweiten Materialkategorie, derart angeordnet ist, dass eine zur Verbindung zweier Übergangsstücke (19) derselben Übergangseinheit (22) miteinander angebrachte Schweißnaht außerhalb einer von den Rohrsegmenten (18) aufgespannten Wandfläche liegt.

**7.** Durchlaufdampferzeuger (1) nach einem der Ansprüche 5 bis 7, dessen Brennkammerwand senkrecht berohrt ist.

**8.** Durchlaufdampferzeuger (1) nach einem der Ansprüche 5 bis 8, wobei benachbarte Dampferzeugerrohre (12) über Flossen (14) gasdicht miteinander verschweißt sind, wobei die Flossen (14) aus einem Material einer zweiten Materialkategorie gefertigt sind.
